# EUROPÄISCHE PATENTSCHRIFT

(11) **EP 0 739 393 B1**
(45) Veröffentlichungstag und Bekanntmachung des Hinweises auf die Patenterteilung: **07.04.1999**
(21) Anmeldenummer: 94922850.6
(22) Anmeldetag: 20.06.1994
(51) Int. Cl.: C09D 151/08, C09D 151/00

(54) **VERFAHREN ZUR HERSTELLUNG VON KORROSIONSSCHUTZGRUNDIERUNGS- UND/ODER FÜLLERSCHICHTEN**
PROCESS FOR PRODUCING ANTICORROSIVE PRIMING AND/OR FILLING LAYERS
PROCEDE DE PRODUCTION DE COUCHES D'APPRET ANTICORROSION ET/OU DE COUCHES DE CHARGE

(30) Priorität: 02.07.1993 DE 4322006
(43) Veröffentlichungstag der Anmeldung: 30.10.1996
(73) Patentinhaber: BASF Coatings Aktiengesellschaft, 48165 Münster (DE)
(72) Erfinder: HARTUNG, Michael, D-48165 Münster (DE); BERNHOFER, Thomas, D-59609 Anröchte (DE); GRUMPE, Heinz-Ulrich, D-48136 Münster (DE); MOORKAMP, Ludwig, D-48165 Münster (DE)
(74) Vertreter: Fitzner, Uwe, Dr.
(86) Internationale Anmeldenummer: EP9401994
(87) Internationale Veröffentlichungsnummer: WO9501405

(56) Entgegenhaltungen:
- EP-A- 0 350 157
- EP-A- 0 401 565
- WO-A-91/15528
- PATENT ABSTRACTS OF JAPAN vol. 12, no. 40 (C-474) 5. Februar 1988 & JP,A,62 190 209 (TERUNITSUKU K.K.K.) 20. August 1987

## Beschreibung

Die Erfindung betrifft ein Verfahren zur Herstellung von Korrosionsschutzgrundierungs- und/oder Füllerschichten, bei dem ein wäßriger Lack auf ein Substrat aufgebracht und die erhaltene Lackschicht getrocknet wird.

Bei der Lackierung von Substraten, die gegen Korrosion geschützt werden sollen, insbesondere bei der Lackierung von Metallsubstraten muß zunächst einmal eine Korrosionsschutzgrundierungsschicht appliziert werden. Die Hauptaufgaben der Korrosionsschutzgrundierungsschicht besteht darin, für den Korrosionsschutz zu sorgen und einen geeigneten Untergrund für die zweite Lackschicht zu liefern. Die zweite Schicht kann aus einer ein- oder zweischichtigen Decklackierung (basecoat/clearcoat) oder einer Füllerschicht bestehen. Im ersteren Fall (Fehlen der Füllerschicht) muß die Korrosionsschutzgrundierungsschicht auch noch die im zweiten Fall von der Füllerschicht übernommene Aufgabe, Unebenheiten des Substrates abzudecken und dadurch für ein einwandfreies Aussehen der Decklackierung zu sorgen, mit übernehmen. Die im zweiten Fall vorhandene Füllerschicht hat ihrerseits nicht nur die Funktion, Unebenheiten des Substrats abzudecken. Sie hat unter anderem auch die Funktion, an den Stellen, an denen die Korrosionsschutzgrundierungsschicht beschädigt ist, für einen ausreichenden Korrosionsschutz zu sorgen.

Korrosionsschutzgrundierungs- und Füllerschichten müssen eine hohe Beständigkeit gegen mechanische Belastungen, Feuchtigkeit und Chemikalien, eine gute Haftung sowohl zum lackierten Substrat als auch zur überlackierten Lackschicht und selbstverständlich eine gute Korrosionsschutzwirkung aufweisen. Außerdem sollen sie möglichst schnell nach der Applikation überlackierbar sein.

Um alle diese Forderungen zu erfüllen, wurden in der Vergangenheit zur Herstellung von Korrosionsschutzgrundierungs- und Füllerschichten Lacke auf Basis organischer Lösemittel eingesetzt, die Bindemittelsysteme enthielten, welche bei hohen Einbrenntemperaturen widerstandsfähige, vernetzte Korrosionsschutzgrundierungs- bzw. Füllerschichten liefern. In neuerer Zeit werden auch wäßrige Lacke eingesetzt, die bei hohen Einbrenntemperaturen eingebrannt werden.

Um Energie einzusparen und aufgrund verschiedener anderer Umstände ist es in vielen Fällen erforderlich, bei der Herstellung von Korrosionsschutzgrundierungs-und/oder Füllerschichten, die nach Aufbringung des Lackes auf das Substrat erhaltene Lackschicht bei tieferen Temperaturen, insbesondere bei einer Temperatur, die unter 110°C, vorzugsweise zwischen 60 und 90°C liegt, zu trocknen.

Aus den Dokumenten WO-A-9 115 528 und EP-A-0 350 157 sind Basislacke, i.e. dekorative Lacke, bekannt, welche ein Bindemittel aus Komponenten I und II aufweisen, wobei eine der Komponenten I oder II erhältlich ist durch Polymerisation ethylenisch ungesättigter Monomere mit einem Polyurethanharz. Bei den insofern bekannten (dekorativen) Basislacken stellt sich die Problematik des Korrosionsschutzes nicht.

Überraschenderweise wurde gefunden, daß bei einem erfahren zur Herstellung von Korrosionsschutzgrundierungs- und/oder Füllerschichten, bei dem ein wäßriger Lack auf das Substrat aufgebracht und die erhaltene Lackschicht getrocknet wird, Korrosionsschutzgrundierungs- und/oder Füllerschichten mit besonders gutem Eigensschaftsprofil erhalten werden, wenn der zur Herstellung der Korrosionsschutzgrundierungs- und/oder Füllerschicht verwendete wäßrige Lack als Bindemittel eine Kombination aus Komponenten (I) und (II) enthält, wobei die Komponenten (I) und (II) in einem Gewichtsverhältnis, bezogen auf Feststoff, von 1,0 : 0,5 bis 1,0 : 5,0 vorliegen und die Komponente (I) eine wäßrige Dispersion eines Polymeren ist, die erhältlich ist, indem in einem organischen Lösemittel oder in einem Gemisch organischer Lösemittel
(A) ethylenisch ungesättigte Monomere oder ein Gemisch ethylenisch ungesättigter Monomere in Gegenwart
(B) eines Polyurethanharzes, das ein zahlenmittleres Molekulargewicht von 200 bis 30.000 aufweist, das im statistischen Mittel pro Molekül 0,05 bis 1,1 polymerisierbare Doppelbindungen enthält, und das erhältlich ist, indem (b1) ein gegebenenfalls polymerisierbare Doppelbindungen aufweisendes Polyesterpolyol mit einem zahlenmittleren Molekulargewicht von 400 bis 5000 oder ein Gemisch aus solchen Polyesterpolyolen und (b2) ein Polyisocyananat oder ein Gemisch aus Polyisocyanaten miteinander umgesetzt werden, wobei als Komponente (b1) ein Polyesterpolyol, das unter Verwendung einer polymerisierten Fettsäure mit 10 bis 44 C-Atomen im Molekül oder einer Mischung aus solchen polymerisierten Fettsäuren hergestellt worden ist, eingesetzt wird,
polymerisiert werden, wobei die Komponente (A) und/oder (B) zur Anionenbildung befähigte Gruppen enthält, und das so erhaltene Reaktionsprodukt in eine wäßrige Dispersion überführt wird und die Komponente (II) eine wäßrige Lösung oder Dispersion eines in Wasser löslichen oder dispergierbaren Styrol-Butadien-copolymeren oder eines in Wasser löslichen oder dispergierbaren Polyacrylat-, Polyester-, Polyurethan- oder Epoxidharzes oder eine Mischung aus solchen wäßrigen Lösungen oder Dispersionen ist.

Die nach dem erfindungsgemäßen Verfahren hergestellten Korrosionsschutzgrundierungs- und/oder Füllerschichten zeichnen sich - auch bei Anwendung von Trocknungstemperaturen, die unter 90°C liegen - durch hohe Beständigkeiten gegenüber mechanischen Belastungen, Feuchtigkeit und Chemikalien, eine gute Haftung sowohl zum lackierten Substrat als auch zur überlackierten Lackschicht sowie durch eine gute Korrosionsschutzwirkung aus. Die erfindungsgemäß eingesetzten wäßrigen Lacke zeichnen sich weiter dadurch aus, daß sie unter Verwendung eines sehr geringen Lösemittelanteils formuliert werden können, sehr gut verarbeitbar sind und Lackschichten liefern, die schon kurze Zeit nach der Applikation überlackierbar sind.

In der DE-A-40 10 176 werden wäßrige Lacke beschrieben, die als Bindemittel wäßrige Dispersionen enthalten, die denen der erfindungsgemäß eingesetzten Komponente (I) ähnlich sind. Die Herstellung von Korrosionsschutzgrundierungs- und/oder Füllerschichten wird in der DE-A-40 10 176 nicht beschrieben. Versuche, aus den in den Beispielen der DE-A-40 10 176 beschriebenen Dispersionen wäßrige Lacke herzustellen und mit diesen Lacken Korrosionsschutzgrundierungsschichten herzustellen, führte zu Korrosionsschutzgrundierungsschichten, die nach Durchführung eines Salzsprühtests nach DIN 50021 sowie nach Durchführung eines Klimawechseltestes nach VDA 621-415 Blasen bildeten und starke Enthaftungserscheinungen zeigten.

Die Komponenten (I) und (II) sind in den erfindungsgemäß eingesetzten Lacken in einem Gewichtsverhältnis, bezogen auf Feststoff, von 1,0 : 0,5, bis 1,0 : 5,0, vorzugsweise von 1,0 : 1,5 bis 1,0 : 2,5, besonders bevorzugt von 1,0 : 1,75 bis 1,0 : 2,25 enthalten.

Die in den erfindungsgemäß eingesetzten Lacken enthaltene Komponente (I) ist eine wäßrige Dispersion eines Polymeren, die erhältlich ist, indem in einem organischen Lösemittel oder in einem Gemisch organischer Lösemittel
(A) ethylenisch ungesättigte Monomere oder ein Gemisch ethylenisch ungesättigter Monomere in Gegenwart
(B) eines Polyurethanharzes, das ein zahlenmittleres Molekulargewicht von 200 bis 30000, vorzugsweise 1000 bis 5000 aufweist und das im statistischen Mittel pro Molekül 0,05 bis 1,1, vorzugsweise 0,2 bis 0,9, besonders bevorzugt 0,3 bis 0,7 polymerisierbare Doppelbindungen enthält,
polymerisiert werden und das so erhaltene Reaktionsprodukt in eine wäßrige Dispersion überführt wird.

Zur Herstellung der erfindungsgemäß eingesetzten Komponente (I) wird in einem ersten Schritt nach gut bekannten Methoden der Polyurethanchemie ein Polyurethanharz (B) hergestellt, das erhältlich ist, indem
(b1) ein gegebenenfalls polymerisierbare Doppelbindungen aufweisendes Polyesterpolyol mit einem zahlenmittleren Molekulargewicht von 400 bis 5000 oder ein Gemisch aus solchen Polyesterpolyolen
(b2) ein Polyisocyananat oder ein Gemisch aus Polyisocyanaten
(b3) gegebenenfalls eine Verbindung, die neben einer polymerisierbaren Doppelbindung mindestens noch eine gegenüber NCO-Gruppen reaktive Gruppe enthält oder ein Gemisch aus solchen Verbindungen
(b4) gegebenenfalls eine Verbindung, die mindestens eine gegenüber Isocyanatgruppen reaktive und mindestens eine zur Anionenbildung befähigte Gruppe im Molekül aufweist oder ein Gemisch aus solchen Verbindungen
(b5) gegebenenfalls eine Verbindung, die mindestens eine gegenüber NCO-Gruppen reaktive Gruppe und mindestens eine Poly(oxyalkylen)gruppe im Molekül aufweist, oder ein Gemisch aus solchen Verbindungen und gegebenenfalls
(b6) eine Hydroxyl- und/oder Aminogruppen enthaltende organische Verbindung mit einem Molekulargewicht von 60 bis 600, oder ein Gemisch aus solchen Verbindungen
zu einem Polyurethanharz umgesetzt werden, das ein zahlenmittleres Molekulargewicht von 200 bis 30000, vorzugsweise 1000 bis 5000, aufweist und das im statistischen Mittel pro Molekül 0,05 bis 1,1, vorzugsweise 0,2 bis 0,9, besonders bevorzugt 0,3 bis 0,7 polymerisierbare Doppelbindungen enthält.

Das Polyurethanharz (B) weist vorzugsweise eine Säurezahl von 0 bis 2,0 auf. Die Säurezahl des Polyurethanharzes kann durch Verwendung entsprechender Mengen an säuregruppenhaltigen Bausteinen leicht gesteuert werden.

Das Molekulargewicht der Polyurethanharze kann - wie dem Fachmann bekannt - insbesondere durch das Mengenverhältnis und die Funktionalität der eingesetzten Ausgangsverbindungen (b1) bis (b6) gesteuert werden.

Die Polyurethanharze können sowohl in Substanz als auch in organischen Lösemitteln hergestellt werden.

Die Polyurethanharze können durch gleichzeitige Umsetzung aller Ausgangsverbindungen hergestellt werden. In vielen Fällen ist es jedoch zweckmäßig, die Polyurethanharze stufenweise herzustellen. So ist es zum Beispiel möglich, aus den Komponenten (b1) und (b2) ein isocyanatgruppenhaltiges Präpolymer herzustellen, das dann mit der Komponente (b3) weiter umgesetzt wird. Weiter ist es möglich, aus den Komponenten (b1), (b2), (b3) und gegebenenfalls (b4) und (b5) ein isocyanatgruppenhaltiges Präpolymer herzustellen, das dann mit der Komponente (b6) zu höhermolekularen Polyurethanen umgesetzt werden kann. In den Fällen, in denen als Komponente (b3) eine Verbindung eingesetzt wird, die nur eine gegenüber Isocyanatgruppen reaktive Gruppe enthält, kann in einer ersten Stufe aus (b2) und (b3) ein isocyanatgruppenhaltiges Vorprodukt hergestellt werden, das anschließend mit den weiteren Komponenten weiter umgesetzt werden kann.

Die Umsetzung der Komponenten (b1) bis (b6) wird zweckmäßigerweise in Gegenwart von Katalysatoren, wie z.B. Dibutylzinndilaurat, Dibutylzinnmaleat, tertiäre Amine usw. durchgeführt.

Die einzusetzenden Mengen an Komponente (b1), (b2), (b3), (b4), (b5) und (b6) ergeben sich aus dem anzustrebenden zahlenmittleren Molekulargewicht und der anzustrebenden Säurezahl. Die polymerisierbaren Doppelbindungen können durch Einsatz von polymerisierbare Doppelbindungen aufweisende (b1)-Komponenten und/oder die Komponente (b3) in die Polyurethanmoleküle eingeführt werden. Es ist bevorzugt, die polymerisierbaren Doppelbindungen über die Komponente (b3) einzuführen.

Als Komponente (b1) können gesättigte und ungesättigte Polyesterpolyole, insbesondere Polyesterdiole, mit einem zahlenmittleren Molekulargewicht von 400 bis 5000 eingesetzt werden.

Polyesterdiole werden durch Veresterung von organischen Dicarbonsäuren oder ihre Anhydriden mit organischen Diolen hergestellt oder leiten sich von einer Hydroxycarbonsäure oder einem Lacton ab. Um verzweigte Polyesterpolyole herzustellen, können in geringem Umfang Polyole oder Polycarbonsäure mit einer höheren Wertigkeit eingesetzt werden. Die Dicarbosäuren und Diole können lineare oder verzweigte aliphatische, cycloaliphatische oder aromatische Dicarbonsäuren oder Diole sein. Die zur Herstellung der Polyester verwendeten Diole bestehen beispielsweise aus Alkylenglykolen, wie Ethylenglykol, Propylenglykol, Butylenglykol, Butandiol-1,4, Hexandiol-1,6, Neopentylglykol und anderen Diolen, wie Dimethylolcyclohexan. Es können jedoch auch kleine Mengen an Polyolen mit mehr als zwei Hydroxylgruppen im Molekül, wie Trimethylolpropan, Glycerin, Pentaerythrit, zugesetzt werden. Die Säurekomponente des Polyesters besteht in erster Linie aus niedermolekularen Dicarbonsäuren oder ihren Anhydriden mit 2 bis 44, bevorzugt 4 bis 36 Kohlenstoffatomen im Molekül. Geeignete Säuren sind beispielsweise o-Phthalsäure, Isophthalsäure, Terephthalsäure, Tetrahydrophthalsäure, Cyclohexandicarbonsäure, Bernsteinsäure, Adipinsäure, Azelainsäure, Sebazinsäure, Maleinsäure, Fumarsäure, Glutarsäure, Hexachlorheptandicarbonsäure, Tetrachlorphthalsäure und/oder dimerisierte Fettsäuren. Anstelle dieser Säuren können auch ihre Anhydride, soweit diese existieren, verwendet werden. Bei der Bildung von Polyesterpolyolen können auch kleinere Mengen an Carbonsäuren mit 3 oder mehr Carboxylgruppen beispielsweise Trimellithsäureanhydrid oder das Addukt von Maleinsäureanhydrid an ungesättigte Fettsäuren anwesend sein.

Es können auch Polyesterdiole eingesetzt werden, die durch Umsetzung eines Lactons mit einem Diol erhalten werden. Sie zeichnen sich durch die Gegenwart von endständigen Hydroxylgruppen und wiederkehrenden Polyesteranteilen der Formel (-CO-(CHR²)ₙ-CH₂-0) aus. Hierbei ist n bevorzugt 4 bis 6 und der Substituent R² = Wasserstoff, ein Alkyl-, Cycloalkyl- oder Alkoxy-Rest. Kein Substituent enthält mehr als 12 Kohlenstoffatome. Die gesamte Anzahl der Kohlenstoffatome im Substituenten übersteigt 12 pro Lactonring nicht. Beispiele hierfür sind Hydroxycapronsäure, Hydroxybuttersäure, Hydroxydecansäure und/oder Hydroxystearinsäure. Für die Herstellung der Polyesterdiole wird das unsubstituierte ε-Caprolacton, bei dem n den Wert 4 hat und alle R²-Substituenten Wasserstoff sind, bevorzugt. Die Umsetzung mit Lacton wird durch niedermolekulare Polyole wie Ethylenglykol, 1,3-Propandiol, 1,4-Butandiol, Dimethylolcyclohexan gestartet. Es können jedoch auch andere Reaktionskomponenten, wie Ethylendiamin, Alkyldialkanolamine oder auch Harnstoff mit Caprolacton umgesetzt werden.

Wenn über die Komponente (b1) polymerisierbare Doppelbindungen in die Polyurethanmoleküle eingeführt werden sollen, dann müssen (b1) Komponenten eingesetzt werden, die polymerisierbare Doppelbindungen enthalten. Als Beispiele für solche (b1) Komponenten werden Polyesterpolyole, vorzugsweise Polyesterdiole genannt, die unter Verwendung von polymerisierbare Doppelbindungen enthaltenden Polyolen und/oder Polycarbonsäuren hergestellte worden sind. Als Beispiele für polymerisierbare Doppelbindungen enthaltende Polyole werden genannt: Trimethylolpropanmonoallylether, Glycerinmonoallylether, Pentaerythritmono- und Pentaerythritdiallylether. Als Beispiele für polymerisierbare Doppelbindungen enthaltende Polycarbonsäuren werden Alkendicarbonsäuren, Maleinsäure und ungesättigte dimerisierte Fettsäuren genannt.

Besonders bevorzugte Polyurethanharze (B) werden erhalten, wenn als Komponente (b1) Polyesterpolyole eingesetzt werden, die unter Verwendung einer polymerisierbaren Fettsäure, insbesondere einer dimerisierten Fettsäure mit 10 bis 44 C-Atomen, vorzugsweise mit 32 bis 36 C-Atomen im Molekül oder einer Mischung aus solchen polymerisierten Fettsäuren hergestellt worden sind. Derartige polymerisierte, insbesondere trimerisierte Fettsäuren sind bekannt und im Handel erhältlich (z.B. Empol® 1010, Hersteller: Emery Chemical Co. und Pripol® 1009, Hersteller: Unichema).

Wenn der Gehalt an über die Komponente (b1) in die Komponente (I) eingeführter polymerisierter Fettsäure 5 bis 30, vorzugsweise 10 bis 20 Gew.-% (bezogen auf Feststoff) beträgt, werden Korrosionsschutzgrundierungs- und/oder Füllerschichten mit besonders guten Eigenschaften erhalten.

Als Komponente (b2) können aliphatische und/oder cycloaliphatische und/oder aromatische Polyisocyanate eingesetzt werden. Als Beispiele für aromatische Polyisocyanate werden Phenylendiisocyanat, Toluylendiisocyanat, Xylylendiisocyanat, Biphenylendiisocyanat, Naphtylendiisocyanat und Diphenylmethandiisocyanat genannt.
Aufgrund ihrer guten Beständigkeit gegenüber ultraviolettem Licht ergeben (cyclo)aliphatische Polyisocyanate Produkte mit geringer Vergilbungsneigung. Beispiele für cycloaliphatische Polyisocyanate sind Isophorondiisocyanat, Cyclopentylendiisocyanat sowie die Hydrierungsprodukte der aromatischen Diisocyanate, wie Cyclohexylendiisocyanat, Methylcyclohexylendiisocyanat und Dicyclohexylmethandiisocyanat. Aliphatische Diisocyanate sind Verbindungen der Formel

OCN-(CR³ ₂)ᵣ-NCO

worin r eine ganze Zahl von 2 bis 20, insbesondere 6 bis 8 ist und R³, das gleich oder verschiedenen sein kann, Wasserstoff oder einen niedrigen Alkylrest mit 1 bis 8 C-Atomen, vorzugsweise 1 oder 2 C-Atomen darstellt. Beispiele hierfür sind Trimethylendiisocyanat, Tetramethylendiisocyanat, Pentamethylendiisocyanat, Hexamethylendiisocyanat, Propylendiisocyanat, Ethylethylendiisocyanat, Dimethylethyldiisocyanat, Methyltrimethylendiisocyanat und Trimethylhexandiisocyanat. Als weiteres Beispiel für ein aliphatisches Diisocyanat wird Tetramethylxyloldiisocyanat genannt. Besonders bevorzugt werden als Diisocyanate Isophorondiisocyanat und Dicyclohexylmethandiisocyanat eingesetzt.

Die Komponente (b2) muß hinsichtlich der Funktionalität der Polyisocyanate so zusammengesetzt sein, daß kein vernetztes Polyurethanharz erhalten wird. Die Komponente (b2) kann neben Diisocyanaten auch einen Anteil an Polyisocyanaten mit Funktionalitäten über zwei - wie z.B. Triisocyanate enthalten.

Als Triisocyanate haben sich Produkte bewährt, die durch Trimerisation oder Oligomerisation von Diisocyanaten oder durch Reaktion von Diisocyanaten mit polyfunktionellen, OH- oder NH-Gruppen enthaltenden Verbindungen entstehen. Hierzu gehören beispielsweise das Isocyanurat des Hexamethylendiisocyanats oder das Addukt von Isophorondiisocyanat an Trimethylolpropan. Die mittlere Funktionalität kann gegebenenfalls durch Zusatz von Monoisocyanaten gesenkt werden. Beispiele für solche kettenabbrechenden Monoisocyanate sind Phenylisocyanat, Cyclohexylisocyanat und Stearylisocyanat.

Die Komponente (b3) dient zur Einführung von polymerisierbaren Doppelbindungen in die Polyurethanharzmoleküle. Es ist bevorzugt, als Komponente (b3) eine Verbindung einzusetzen, die mindestens zwei gegenüber NCO-Gruppen reaktive Gruppen und eine polymerisierbare Doppelbindung enthält. Besonders bevorzugt werden als Komponente (b3) Verbindungen eingesetzt, die neben einer polymerisierbaren Doppelbindung noch zwei gegenüber NCO-Gruppen reaktive Gruppen enthalten. Als Beispiele für gegenüber NCO-Gruppen reaktive Gruppen werden -OH, -SH, > NH und -NH₂-Gruppen genannt, wobei -OH, > NH und -NH₂-Gruppen bevorzugt sind. Als Beispiele für Verbindungen, die als Komponente (b3) eingesetzt werden können, werden genannt: Hydroxy(meth)acrylate, insbesondere Hydroxyalkyl(meth)acrylate wie Hydroxyethyl-, Hydroxypropyl-, Hydroxybutyl- oder Hydroxyhexyl(meth)acrylat und 2,3-Dihydroxypropyl(meth)acrylat, 2,3-Dihydroxypropylmonoallylether, 2,3-Dihydroxypropansäureallylester, Glycerinmono(meth)acrylat, Glycerinmonoallylether, Pentaerythritmono(meth)acrylat, Pentaerythritdi(meth)acrylat, Pentaerythritmonoallylether, Pentaerythritdiallylether, Trimethylolpropanmonoallylether, Trimethylolpropanmono(meth)acrylat und Trimethylolpropandiallylether. Als Komponente (b3) wird vorzugsweise Trimethylolpropanmonoallylether, Glycerinmono(meth)acrylat, Pentaerythritdi(meth)acrylat, Pentaerythritdiallylether, Glycerinmonoallylether und Trimethylolpropanmono(meth)acrylat eingesetzt. Als Komponente (b3) werden besonders bevorzugt Trimethylolpropanmonoallylether, Glycerinmonoallylether und 2,3-Dihydroxypropansäureallylester eingesetzt. Es ist bevorzugt, die (b3) Komponenten, die mindestens zwei gegenüber NCO-Gruppen reaktive Gruppen enthalten, kettenständig (nicht endständig) in die Polyurethanmoleküle einzubauen.

Die Einführung von zur Anionenbildung befähigten Gruppen in die Polyurethanmoleküle erfolgt über den Einbau von Verbindungen (b4) in die Polyurethanmoleküle, die mindestens eine gegenüber Isocyanatgruppen reaktive und eine zur Anionenbildung befähigte Gruppe im Molekül enthalten.

Die Menge an einzusetzender Komponente (b4) kann aus der angestrebten Säurezahl berechnet werden.

Als Komponente (b4) werden vorzugsweise Verbindungen eingesetzt, die zwei gegenüber Isocyanatgruppen reaktive Gruppen im Molekül enthalten. Geeignete gegenüber Isocyanatgruppen reaktive Gruppen sind insbesondere Hydroxylgruppen sowie primäre und/oder sekundäre Aminogruppen. Geeignete zur Anionenbildung befähigte Gruppen sind Carboxyl-, Sulfonsäure- und/oder Phosphonsäuregruppen, wobei Carboxylgruppen bevorzugt sind. Als Komponente (b4) können beispielsweise Alkansäuren mit zwei Substituenten am α-ständigem Kohlenstoffatom eingesetzt werden. Der Substituent kann eine Hydroxylgruppen, eine Alkylgruppe oder bevorzugt eine Alkylolgruppe sein. Diese Alkansäuren haben mindestens eine, im allgemeinen 1 bis 3 Carboxylgruppen im Molekül. Sie haben zwei bis etwa 25, vorzugsweise 3 bis 10 Kohlenstoffatome. Beispiele für die Komponente (b4) sind Dihydroxypropionsäure, Dihydroxybernsteinsäure und Dihydroxybenzoesäure. Eine besonders bevorzugte Gruppe von Alkansäuren sind die α,α-Dimethylolalkansäuren der allgemeinen Formel

R⁴-C(CH₂OH)₂COOH,

wobei
R⁴ für ein Wasserstoffatom oder eine Alkylgruppe mit bis zu etwa 20 Kohlenstoffatomen steht. Beispiele für solche Verbindungen sind 2,2-Dimethylolessigsäure, 2,2-Dimethylolpropionsäure, 2,2-Dimethylolbuttersäure und 2,2-Dimethylolpentansäure. Die bevorzugte Dihydroxyalkansäure ist 2,2-Dimethylolpropionsäure. Aminogruppenhaltige Verbindungen sind beispielsweise α,δ-Diaminovaleriansäure, 3,4-Diaminobenzoesäure, 2,4-Diaminotoluolsulfonsäure und 2,4-Diaminodiphenylethersulfonsäure.

Mit Hilfe der Komponente (b5) können Poly(oxyalkylen)gruppen als nichtionische stabilisierende Gruppen in die Polyurethanmoleküle eingeführt werden. Als Komponente (b5) können beispielsweise eingesetzt werden Alkoxypoly(oxyalkylen)alkohole mit der allgemeinen Formel R'O-(-CH₂-CHR"-O-)ₙ H in der R' für einen Alkylrest mit 1 bis 6 Kohlenstoffatomen, R" für ein Wasserstoffatom oder einen Alkylrest mit 1 bis 6 Kohlenstoffatomen und n für eine Zahl zwischen 20 und 75 steht.

Der Einsatz der Komponente (b6) führt zur Molekulargewichtserhöhung der Polyurethanharze. Als Komponente (b6) können beispielsweise Polyole mit bis zu 36 Kohlenstoffatomen je Molekül wie Ethylenglykol, Diethylenglykol, Triethylenglykol, 1,2-Propandiol, 1,3-Propandiol, 1,4-Butandiol, 1,2-Butylenglykol, 1,6-Hexandiol, Trimethylolpropan, Ricinusöl oder hydriertes Ricinusöl, Pentaerythrit, 1,2-Cyclohexandiol, 1,4-Cyclohexandimethanol, Bisphenol A, Bisphenol F, Neopentylglykol, Hydroxypivalinsäureneopentylglykolester, hydroxyethyliertes oder hydroxypropyliertes Bisphenol A, hydriertes Bisphenol A und deren Mischungen eingesetzt werden. Die Polyole werden im allgemeinen in Mengen von bis zu 30 Gewichtsprozent, vorzugsweise 2 bis 20 Gewichtsprozent, bezogen auf die eingesetzte Menge an Komponente (b1) und (b6) eingesetzt.

Als Komponente (b6) können auch Di- und/oder Polyamine mit primären und/oder sekundären Aminogruppen eingesetzt werden. Polyamine sind im wesentlichen Alkylen-Polyamine mit 1 bis 40 Kohlenstoffatomen, vorzugsweise etwa 2 bis 15 Kohlenstoffatomen. Sie können Substituenten tragen, die keine mit Isocyanat-Gruppen reaktionsfähige Wasserstoffatome haben. Beispiele sind Polyamine mit linearer oder verzweigter aliphatischer, cycloaliphatischer oder aromatischer Struktur und wenigstens zwei primären Aminogruppen. Als Diamine sind zu nennen Hydrazin, Ethylendiamin, Propylendiamin, 1,4-Butylendiamin, Piperazin, 1,4-Cyclohexyldimethylamin, Hexamethylendiamin-1,6, Trimethylhexamethylendiamin, Menthandiamin, Isophorondiamin, 4,4'-Diaminodicyclohexylmethan und Aminoethylethanolamin. Bevorzugte Diamine sind Hydrazin, Alkyl- oder Cycloalkyldiamine wie Propylendiamin und 1-Amino-3-aminomethyl-3,5,5-trimethylcyclohexan. Es können auch Polyamine als Komponente (b6) eingesetzt werden, die mehr als zwei Aminogruppen im Molekül enthalten. In diesen Fällen ist jedoch - z.B. durch Mitverwendung von Monoaminen - darauf zu achten, daß keine vernetzten Polyurethanharze erhalten werden. Solche brauchbaren Polyamine sind Diethylentriamin, Triethylentetramin, Dipropylendiamin und Dibutylentriamin. Als Beispiel für ein Monoamin wird Ethylhexylamin genannt.

Die erfindungsgemäß eingesetzte Komponente (I) wird hergestellt, indem eine Lösung des Polyurethanharzes (B) in einem organischen Lösemittel bzw. einem organischen Lösemittelgemisch bereitgestellt wird und in dieser Lösung ethylenisch ungesättigte Monomere oder ein Gemisch ethylenisch ungesättigter Monomere in einer radikalischen Polymerisation polymerisiert werden und das so erhaltene Reaktionsprodukt in eine wäßrige Dispersion überführt wird. Es ist bevorzugt, wassermischbare organische Lösemittel einzusetzen. Als Beispiele für brauchbare Lösemittel werden Butylglykol, 2-Methoxypropanol, n-Butanol, Methoxybutanol, n-Propanol, Ethylenglykolmonomethylether, Ethylenglykolmonoethylether, Ethylenglykolmonobutylether, Diethylenglykolmonomethylether, Diethylenglykolmonoethylether, Diethylenglykoldiethyleter, Diethylenglykolmonobutylether und 3-Methyl-3-methoxybutanol oder Mischungen aus diesen Lösemitteln genannt.

Bevorzugt werden Ketone, wie z.B. Aceton, Methylethylketon, Diethylketon und Methylisobutylketon.

Die radikalische Polymerisation wird bei Temperaturen von 80 bis 160°C, vorzugsweise 100 bis 160°C in den obengenannten organischen Lösemitteln bzw. Lösemittelgemischen durchgeführt.

Als Beispiele für brauchbare Polymerisationsinitiatoren werden freie Radikale bildende Initiatoren, wie z.B. Benzoylperoxid, Azobisisobutyronitril und t-Butylperbenzoat genannt.

Bei der Polymerisation kommt es auch zu Pfropfungsreaktionen zwischen dem Polyurethanharz (B) und der Komponente (A).

Als ethylenisch ungesättigte Monomere können praktisch alle radikalisch polymerisierbaren Monomere eingesetzt werden, wobei jedoch die üblichen Einschränkungen für Copolymerisationen gelten, die durch das Q- und e-Schema nach Alfrey und Price bzw. durch die Copolymerisationsparameter vorgegeben sind (vgl. z.B. Bandrup und Immergut, Polymer Handbook, 2nd ed. John Wiley + Sons, New York (1975).

Bevorzugt eingesetzte Komponenten (I) sind erhältlich, indem in einem organischen Lösemittel oder in einem Gemisch organischer Lösemittel
(a1) 10 bis 90, vorzugsweise 30 bis 60 Gew.-%, aliphatische oder cycloaliphatische Ester der Acrylsäure oder Methacrylsäure oder ein Gemisch aus solchen Estern,
(a2) 0 bis 1, vorzugsweise 0 Gew.-%, eines mindestens eine Hydroxylgruppe im Molekül tragenden ethylenisch ungesättigten Monomeren oder eines Gemisches aus solchen Monomeren,
(a3) 0 bis 30, vorzugsweise 1 bis 5 Gew.-%, eines mindestens eine Carboxylgruppe im Molekül tragenden ethylenisch ungesättigten Monomeren oder eines Gemisches aus solchen Monomeren und
(a4) 0 bis 7, vorzugsweise 1 bis 4 Gew.-%, eines von (a1), (a2) und (a3) verschiedenen ethylenisch ungesättigten Monomeren oder ein Gemisch aus solchen Monomeren
in Gegenwart von 10 bis 90, vorzugsweise 68 bis 38 Gew.-%, der Komponente (B) polymerisiert werden und das so erhaltene Reaktionsprodukt in eine wäßrige Dispersion überführt wird.

Als Komponente (a1) können z.B. eingesetzt werden: Cyclohexylacrylat, Cyclohexylmethacrylat, Alkylacrylate und Alkylmethacrylate mit bis zu 20 Kohlenstoffatomen im Alkylrest, wie z.B. Methyl-, Ethyl-, Propyl-, Butyl-, Hexyl-, Ethylhexyl-, Stearyl- und Laurylacrylat und -methacrylat oder Gemische aus diesen Monomeren.

Als Komponente (a1) wird vorzugsweise ein Alkylmethacrylat mit bis zu 20 Kohlenstoffatomen im Alkylrest oder eine Mischung aus solchen Alkylmethacrylaten eingesetzt. Als Komponente (a1) wird ganz besonders bevorzugt Methylmethacrylat eingesetzt.

Als Komponente (a2) können z.B. eingesetzt werden: Hydroxyalkylester der Acrylsäure, Methacrylsäure oder einer anderen α,β-ethylenisch ungesättigten Carbonsäure. Diese Ester können sich von einem Alkylenglykol ableiten, das mit der Säure verestert ist, oder sie können durch Umsetzung der Säure mit einem Alkylenoxid erhalten werden. Als Komponente (ii) werden vorzugsweise Hydroxyalkylester der Acrylsäure und Methacrylsäure, in denen die Hydroxyalkylgruppe bis zu 4 Kohlenstoffatome enthält, oder Mischungen aus diesen Hydroxyalkylestern eingesetzt. Als Beispiele für derartige Hydroxyalkylester werden 2-Hydroxyethylacrylat, 2-Hydroxypropylacrylat, 2-Hydroxypropylmethacrylat, 3-Hydroxypropylacrylat, 3-Hydroxypropylmethacrylat, 2-Hydroxyethylmethacrylat, 4-Hydroxybutylacrylat oder 4-Hydroxybutyl(meth)acrylat genannt. Entsprechende Ester von anderen ungesättigten Säuren, wie z.B. Ethacrylsäure, Crotonsäure und ähnliche Säuren mit bis zu etwa 6 Kohlenstoffatomen pro Molekül können auch eingesetzt werden.

Als Komponente (a3) werden vorzugsweise Acrylsäure und/oder Methacrylsäure eingesetzt. Es können aber auch andere ethylenisch ungesättigte Säuren mit bis zu 6 Kohlenstoffatomen im Molekül eingesetzt werden. Als Beispiele für solche Säuren werden Ethacrylsäure, Crotonsäure, Maleinsäure, Fumarsäure und Itaconsäure genannt.

Als Komponente (a4) können z.B. eingesetzt werden: vinylaromatische Kohlenwasserstoffe, wie Styrol, α-Alkylstyrol und Vinyltoluol, Acryl- und Methacrylamid und Acryl- und Methacrylnitril oder Gemische aus diesen Monomeren. Als Komponente (a4) können auch Verbindungen eingesetzt werden, die mindestens zwei radikalisch polymerisierbare Doppelbindungen im Molekül enthalten. Als Beispiele werden genannt: Divinylbenzol, p-Methyldivinylbenzol, o-Nonyldivinylbenzol, Ethandioldi(meth)acrylat, 1,4-Butandioldi(meth)acrylat, 1,6-Hexandioldi(meth)acrylat, Trimethylolpropantri(meth)acrylat, Pentaerythritdi(meth)acrylat, Allylmethacrylat, Diallylphthalat, Butandioldivinylether, Divinylethylenharnstoff, Divinylpropylenharnstoff, Maleinsäurediallylester usw.

Bevorzugt wird der Einsatz von difunktionellen ungesättigten Monomeren wie Butandioldiacrylat oder Hexandioldiacrylat. Bei Verwendung von Glycidylmethacrylat und Methacrylsäure entsteht das entsprechende Glycerindimethacrylat automatisch bei der Polymerisation. Die Art und Menge an polyungesättigten Monomeren ist mit den Reaktionsbedingungen (Katalysatoren, Reaktionstemperatur, Lösemittel) sorgfältig abzustimmen, um keine Gelierung zu erhalten. Die zugesetzte Menge an polyungesättigten Monomeren dient dazu, ohne Gelbildungen die mittlere Molmasse anzuheben. Bevorzugt ist es jedoch, kein polyungesättigtes Monomeres zuzusetzen.

Die Überführung des aus den Komponenten (A) und (B) hergestellten Reaktionsproduktes in eine wäßrige Dispersion erfolgt, indem die in dem Reaktionsprodukt enthaltenen, zur Anionenbildung befähigten Gruppen (vgl. beispielsweise (b4) und (a3); es ist auch möglich, durch Verwendung von carboxylgruppenhaltigen Polyesterdiolen als Komponente (b1) zur Anionenbildung befähigte Gruppen in die Komponente (A) einzuführen) vor oder während der Überführung des Reaktionsproduktes aus dem organischen Lösemittel bzw. Lösemittelgemisch in Wasser, das gegebenenfalls auch noch wassermischbare organische Lösemittel enthalten kann, ganz oder teilweise neutralisiert werden.

Zur Neutralisation können sowohl organische Basen als auch anorganische Basen, wie Ammoniak und Hydrazin, verwendet werden. Vorzugsweise werden primäre, sekundäre und tertiäre Amine, wie z.B. Ethylamin, Propylamin, Dimethylamin, Dibutylamin, Cyclohexylamin, Benzylamin, Morpholin, Piperidin und Triethanolamin verwendet. Besonders bevorzugt werden tertiäre Amine als Neutralisationsmittel eingesetzt, insbesondere Dimethylethanolamin, Triethylamin, Tripropylamin und Tributylamin.

Der Gehalt an zur Anionenbildung befähigten Gruppen in dem aus den Komponenten (A) und (B) hergestellten Reaktionsprodukt soll so hoch sein, daß die Komponente (I) eine Säurezahl (bezogen auf Feststoffgehalt) von 5 bis 200, vorzugsweise 10 bis 40, besonders bevorzugt 15 bis 30 aufweist. Die zur Anionenbildung befähigten Gruppen können ausschließlich in der Komponente (A) oder ausschließlich in der Komponente (B) oder sowohl in der Komponente (A) als auch in der Komponente (B) enthalten sein. Es ist bevorzugt daß 50 bis 100, vorzugsweise 70 bis 100, besonders bevorzugt 100 % der zur Anionenbildung befähigten Gruppen in der Komponente (A) enthalten sind.

Die erfindungsgemäß eingesetzte Komponente (I) kann neben den anionischen bzw. zur Anionenbildung befähigte Gruppen auch noch nichtionische, stabilisierende Gruppen, wie z.B. Poly(oxyalkylen)gruppen, insbesondere Poly(oxyethylen)- und/oder Poly(oxypropylen)- und/oder Poly(oxyethylen) (oxypropylen)gruppen enthalten, wobei die Existenz derartiger Gruppen in der Komponente (A) weniger bevorzugt ist. Die Komponente (I) ist vorzugsweise frei von nichtionischen, stabilisierenden Gruppen der oben beschriebenen Art.

Es ist bevorzugt, daß die aus den Komponenten (A) und (B) hergestellte Komponente (I) eine Hydroxylzahl, bezogen auf Feststoffgehalt, von 0 bis 60, besonders bevorzugt von 0 bis 20 und ein zahlenmitttleres Molekulargewicht von 2000 bis 20.000, besonders bevorzugt von 5000 bis 12.000 aufweist.

Aus der nach Überführung des Reaktionsproduktes aus (A) und (B) in Wasser erhaltenen wäßrigen Dispersionen (Komponente (I)) kann ein Teil oder das gesamte organische Lösemittel abdestilliert werden. Die so erhaltenen wäßrigen Dispersionen enthalten Polymerteilchen, deren mittlere Teilchengröße zwischen 10 und 500 nm, vorzugsweise zwischen 60 und 100 nm liegen (Meßmethode: Laserlichtstreuung, Meßgerät: Malvern Autosizer 2 C).

Die erfindungsgemäß eingesetzten wäßrigen Lacke enthalten neben der Komponente (I) auch noch eine Komponente (II). Die Komponente (II) besteht aus einer wäßrigen Lösung oder Dispersion eines in Wasser löslichen oder dispergierbaren Styrol-Butadien-Copolymeren oder eines in Wasser löslichen oder dispergierbaren Polyacrylat-, Polyester-, Polyurethan- oder Epoxidharzes oder aus einer Mischung aus solchen wäßrigen Lösungen oder Dispersionen.

In Wasser lösliche oder dispergierbare Styrol-Butadien-Copolymere sind im Handel in großer Auswahl erhältlich. Es handelt sich in der Regel um carboxylgruppenhaltige Copolymere, die durch eine wenigstens teilweise Neutralisation von Carboxylgruppen wasserlöslich bzw. wasserdispergierbar gemacht worden sind. Die Carboxylgruppen werden oft durch Einpolymerisation von Maleinsäure in die Styrol-Butadien-Copolymere eingeführt. Die Styrol-Butadien-Copolymere können neben Styrol, Butadien und carboxylgruppenhaltigen Comonomeren selbstverständlich auch noch weitere Comonomere, wie z. B. Alkylacrylate und/oder Alkylmethacrylate enthalten. Wäßrige Styrol-Butadien-Copolymerdispersionen können auch Emulgatoren oder Mischungen aus Emulgatoren als stabilisierende Zusätze enthalten.

In Wasser lösliche oder dispergierbare Polyacrylat-, Polyester-, Polyurethan- oder Epoxidharze sind dem Fachmann so gut bekannt, daß sie hier nicht näher beschrieben werden müssen (vgl. z.B. Lehrbuch der Lacke und Beschichtugnen, Band I, Teil 1 bis 3, 1974, Verlag W.A. Colomb in der H. Heenemann GmbH, Berlin-Oberschwandorf). Wäßrige Lösungen oder Dispersionen von in Wasser dispergierbaren Polyacrylat-, Polyester-, Polyurethan- oder Epoxidharzen sind im Handel beispielsweise von den Firmen BASF AG, Bayer AG, Hoechst AG, Hüls AG usw. erhältlich.

Neben der Komponente (I) und (II) enthalten die erfindungsgemäß eingesetzten wäßrigen Lacke die für wäßrige Lacke, welche zur Herstellung von Korrosionsschutzgrundierungs- und/oder Füllerschichten verwendet werden, üblichen Füllstoffe (wie z.B. Mikrotalkum, Bariumsulfat, Blancfixe, Aluminiumsilikate usw.) und Pigmente (wie z.B. Titandioxid, Eisenoxidpigmente, Ruß, Antikorrosionspigmente usw.) in den für Lacke dieser Art üblichen Mengen (das Pigment-Bindemittelverhältnis liegt üblicherweise zwischen 0,5 : 1 und 2,5 : 1, vorzugsweise zwischen 1,3 : 1 und 1,8 : 1).

Die erfindungsgemäß eingesetzten wäßrigen Lacke können hergestellt werden, indem in einem Teil der insgesamt einzusetzenden Komponenten (I) und/oder (II) die Füllstoffe und Pigmente dispergiert werden und diese Dispersion (Pigmentpaste) dann in eine Mischung der restlichen Komponente (I) und/oder (II) eingerührt wird.

Die Komponente (I) und (II) werden so gemischt, daß die Komponente (I) und (II) in den erfindungsgemäß eingesetzten wäßrigen Lacken in einem Gewichtsverhältnis, bezogen auf Feststoff, von 1,0 : 0,5 bis 1,0 : 5,0, vorzugsweise 1,0 : 1,5 bis 1,0 : 2,5, besonders bevorzugt 1,0 : 1,75 bis 1,0 : 2,25 vorliegen.

Die erfindungsgemäß eingesetzten wäßrigen Lacke können neben den Komponenten (I) und (II) auch noch Vernetzungsmittel oder Mischungen aus Vernetzungsmitteln enthalten. Als Beispiele für Vernetzungsmittel werden Aminoplastharze und gegebenenfalls blockierte Polyisocyanate genannt. Es ist jedoch bevorzugt, daß die erfindungsgemäß eingesetzten wäßrigen Lacke keine Vernetzungsmittel enthalten.

Den erfindungsgemäß eingesetzten wäßrigen Lacken können selbstverständlich übliche anorganische oder organische Additive, wie z.B. Verdicker zugesetzt werden. So wirken als Verdicker beispielsweise wasserlösliche Celluloseether, wie Hydroxyethylcellulose, Methylcellulose oder Carboxymethylcellulose sowie synthetische Polymere mit ionischen und/oder assoziativ wirkenden Gruppen, wie Polyvinylalkohol, Poly(meth)acrylamid, Poly(meth)acrylsäure, Polyvinylpyrrolidon, Styrol-Maleinsäureanhydrid oder Ethylen-Maleinsäureanhydrid-Copolymere und ihre Derivate oder auch hydrophob modifizierte ethoxylierte Urethane oder Polyacrylate sowie carboxylgruppenhaltige Polyacrylat-Copolymere mit einer Säurezahl von 60 bis 780, bevorzugt 200 bis 500.

Die erfindungsgemäß eingesetzten Lacke können durch Spritzen, Rakeln, Tauchen, Walzen, vorzugsweise durch airless und pneumatisches Spritzen appliziert werden.

In den folgenden Beispielen wird die Erfindung näher erläutert. Alle Angaben zu Prozenten und Teilen sind Gewichtsangaben, wenn nicht ausdrücklich etwas anderes angegeben wird.

### 1. Herstellung der Komponente (I)

### 1.1. Dispersion (I)-1

In einem 4 l Reaktionsgefäß mit Rührer, Rückflußkühler und zwei Zulaufgefäßen werden zu einer Mischung aus 472,5 g eines Polyesterpolyols mit einem zahlenmittleren Molekulargewicht von 1400 (hergestellt durch Umsetzung von dimerisierter Fettsäure (Pripol® 1009, Hersteller: Unichema), Isophthalsäure, Adipinsäure, Neopentylglykol und Hexandiol in einem Molverhältnis von 1,5 : 1,0 : 0,5 : 1,5 : 2,5), 25,5 g Neopentylglykol, 8,1 g Trimethylolpropanmonoallylether, 0,5 g Dibutylzinndilaurat und 471,9 g Methylisobutylketon 174,3 g Isophorondiisocyanat gegeben. Diese Reaktionsmischung wird so lange bei 105°C gehalten, bis der Isocyanatgehalt auf 1,1 % abgesunken ist. Nach Zugabe von 40,5 g Trimethylolpropan wird die Temperatur so lange bei 105°C gehalten, bis keine Isocyanatgruppen mehr nachweisbar sind.

Bei einer Temperatur von 105°C wird anschließend ein Gemisch aus 420 g Methylmethacrylat, 246 g n-Butylacrylat und 55,5 g Acrylsäure innerhalb von 3 Stunden zu dem Reaktionsgemisch gegeben. Gleichzeitig zur Zugabe dieses Gemisches werden 168,9 g einer 13 %igen Lösung von t-Butylperethylhexanoat in Methylisobutylketon innerhalb von 3,5 Stunden zudosiert.

Die Mischung wird für weitere 2,5 Stunden bei 105°C gehalten. Dann werden 45 g Dimethylethanolamin und anschließend 2300 g deionisiertes Wasser innerhalb von 2 Stunden unter starkem Rühren langsam zugegeben. Schließlich wird das Methylisobutylketon im Vakuum abdestilliert. Es wird eine wäßrige Dispersion mit einem Feststoffgehalt von 41 % erhalten.

### 1.2. Dispersion (I)-2

In einem 4 l Reaktionsgefäß mit Rührer, Rückflußkühler und zwei Zulaufgefäßen werden zu einer Mischung aus 460,0 g eines Polyesterpolyols mit einem zahlenmittleren Molekulargewicht von 1200 (hergestellt durch Umsetzung von dimerisierter Fettsäure (Pripol® 1009, Hersteller: Unichema), Hexahydro-Phthalsäureanhydrid und Hexandiol in einem Molverhältnis von 0,75 : 2,25 : 4,0) 29,6 g Neopentylglykol, 9,6 g Trimethylolpropanmonoallylether, 1,1 g Dibutylzinndilaurat und 490,6 g Methylisobutylketon 203,0 g Isophorondiisocyanat gegeben. Diese Reaktionsmischung wird so lange bei 105°C gehalten, bis der Isocyanatgehalt auf 1,3 % abgesunken ist. Nach Zugabe von 49,2 g Trimethylolpropan wird die Temperatur so lange bei 105°C gehalten, bis keine Isocyanatgruppen mehr nachweisbar sind.

Bei einer Temperatur von 105°C wird anschließend ein Gemisch aus 432,3 g Methylmethacrylat, 253,2 g n-Butylacrylat und 57,8 g Acrylsäure innerhalb von 3 Stunden zu dem Reaktionsgemisch gegeben. Gleichzeitig zur Zugabe dieses Gemisches werden 173,5 g einer 13 %igen Lösung von t-Butylperethylhexanoat in Methylisobutylketon innerhalb von 3,5 Stunden zudosiert.

Die Mischung wird für weitere 2,5 Stunden bei 105°C gehalten. Dann werden 46,6 g Dimethylethanolamin und anschließend 2300 g deionisiertes Wasser innerhalb von 2 Stunden unter starkem Rühren langsam zugegeben. Schließlich wird das Methylisobutylketon im Vakuum abdestilliert. Es wird eine wäßrige Dispersion mit einem Feststoffgehalt von 41 % erhalten.

### 1.3. Dispersion (I)-3

In einem 4 l Reaktionsgefäß mit Rührer, Rückflußkühler und zwei Zulaufgefäßen werden zu einer Mischung aus 677,3 g eines Polyesterpolyols mit einem zahlenmittleren Molekulargewicht von 1400 (hergestellt durch Umsetzung von dimerisierter Fettsäure (Pripol® 1009, Hersteller: Unichema), Isophthalsäure und Neopentylglykol in einem Molverhältnis von 1,5 : 1,5 : 4,0) 36,6 g Neopentylglykol, 11,6 g Trimethylolpropanmonoallylether, 0,6 g Dibutylzinndilaurat und 675,4 g Methylisobutylketon 249,7 g Isophorondiisocyanat gegeben. Diese Reaktionsmischung wird so lange bei 105°C gehalten, bis der Isocyanatgehalt auf 1,1 % abgesunken ist. Nach Zugabe von 45,1 g Neopentylglykol wird die Temperatur so lange bei 105°C gehalten, bis keine Isocyanatgruppen mehr nachweisbar sind.

Bei einer Temperatur von 105°C wird anschließend ein Gemisch aus 305,6 g Methylmethacrylat, 141,9 g n-Butylacrylat, 37,1 g Styrol und 57,8 g Acrylsäure innerhalb von 3 Stunden zu dem Reaktionsgemisch gegeben. Gleichzeitig zur Zugabe dieses Gemisches werden 122,9 g einer 13 %igen Lösung von t-Butylperethylhexanoat in Methylisobutylketon innerhalb von 3,5 Stunden zudosiert.

Die Mischung wird für weitere 2,5 Stunden bei 105°C gehalten. Dann werden 48 g Dimethylethanolamin und anschließend 2300 g deionisiertes Wasser innerhalb von 2 Stunden unter starkem Rühren langsam zugegeben. Schließlich wird das Methylisobutylketon im Vakuum abdestilliert. Es wird eine wäßrige Dispersion mit einem Feststoffgehalt von 41 % erhalten.

### 2. Herstellung erfindungsgemäßer wäßriger Lacke

### Lack 1

22 Teile der Dispersion (I)-1, 1,5 Teile Butylglykol, 8,5 Teile handelsübliche Farbpigmente, 12,5 Teile Talkum (10 µm), 6,9 Teile Bariumsulfat, 12,0 Teile Zinkphosphat, 17,5 Teile einer handelsüblichen 50 %igen wäßrigen Dispersion eines carboxylgruppenhaltigen Styrol-Butadiencopolymers, 0,3 Teile eines handelsüblichen Korrosionsinhibitors und 0,3 Teile eines Entschäumungsmittels werden unter Rühren vermischt, 15 Minuten lang in einem Dissolver bei 21 m/s vordispergiert und anschließend in einer Perlmühle bei max. 50°C auf 25 - 30 µm Feinheit vermahlen. Anschließend werden weitere 18 Teile der handelsüblichen 50 %igen wäßrigen Dispersion eines carboxylgruppenhaltigen Styrol-Butadiencopolymers zusammen mit 1 Teil einer handelsüblichen 10 %igen wäßrigen, verdickend wirkenden Polyacrylatharzdispersion zugegeben.

### Lack 2

Lack 2 wird wie Lack 1 hergestellt mit dem einzigen Unterschied, daß anstelle der Dispersion (I)-1 die Dispersion (I)-2 eingesetzt wird.

### Lack 3

Lack 3 wird wie Lack 1 hergestellt mit den einzigen Unterschied, daß anstelle der Dispersion (I)-1 die Dispersion (I)-3 eingesetzt wird.

### 3. Applikation der erfindungsgemäßen wäßrigen Lacke und Prüfung der erhaltenen Lackfilme

Die Lacke 1, 2 und 3 werden mit einer Fließbecherpistole bei einem Zerstäuberdruck von 4 - 5 bar auf entfettete Kaltwalzstahlbleche so lackiert, daß Trockenfilmstärken von 60 - 80 µm erhalten werden.

Nach kurzer Abdunstzeit wird 60 min. lang bei 80°C getrocknet. Danach wird für 480 Stunden ein Salzsprühtest nach DIN 50 021 durchgeführt. Es wird eine Unterwanderung von nur 1 - 2 mm am Ritz festgestellt. Nach 10 Runden Klimawechseltest nach VDA 621-415 werden keine Blasen, sehr gute Haftung zum Substrat und 3-4 mm Unterwanderung am Ritz festgestellt.

## Patentansprüche

1. Verfahren zur Herstellung von Korrosionsschutzgrundierungs- und/oder Füllerschichten, bei dem ein wäßriger Lack auf das Substrat aufgebracht und die erhaltene Lackschicht getrocknet wird, dadurch gekennzeichnet, daß der wäßrige Lack als Bindemittel eine Kombination aus den Komponenten (I) und (II) enthält, wobei die Komponenten (I) und (II) in einem Gewichtsverhältnis, bezogen auf Feststoff, von 1,0 : 0,5 bis 1,0 : 5,0 vorliegen und die Komponente (I) eine wäßrige Dispersion eines Polymeren ist, die erhältlich ist, indem in einem organischen Lösemittel oder in einem Gemisch organischer Lösemittel
(A) ethylenisch ungesättigte Monomere oder ein Gemisch ethylenisch ungesättigter Monomere in Gegenwart
(B) eines Polyurethanharzes, das ein zahlenmittleres Molekulargewicht von 200 bis 30.000 aufweist, das im statistischen Mittel pro Molekül 0,05 bis 1,1 polymerisierbare Doppelbindungen enthält, und das erhältlich ist, indem (b1) ein gegebenenfalls polymerisierbare Doppelbindungen aufweisendes Polyesterpolyol mit einem zahlenmittleren Molekulargewicht von 400 bis 5000 oder ein Gemisch aus solchen Polyesterpolyolen und (b2) ein Polyisocyanat oder ein Gemisch aus Polyisocyanaten miteinander umgesetzt werden, wobei als Komponente (b1) ein Polyesterpolyol, das unter Verwendung einer polymerisierten Fettsäure mit 10 bis 44 C-Atomen im Molekül oder einer Mischung aus solchen polymerisierten Fettsäuren hergestellt worden ist, eingesetzt wird,
polymerisiert werden, wobei die Komponente (A) und/oder (B) zur Anionenbildung befähigte Gruppen enthält, und das so erhaltene Reaktionsprodukt in eine wäßrige Dispersion überführt wird und die Komponente (II) eine wäßrige Lösung oder Dispersion eines in Wasser löslichen oder dispergierbaren Styrol-Butadien-copolymeren oder eines in Wasser löslichen oder dispergierbaren Polyacrylat-, Polyester-, Polyurethan- oder Epoxidharzes oder eine Mischung aus solchen wäßrigen Lösungen oder Dispersionen ist.

2. Verfahren nach Anspruch 1, dadurch gekennzeichnet, daß die erhaltene Lackschicht bei einer Temperatur, die unter 110°C liegt, getrocknet wird.

3. Verfahren nach Anspruch 1 oder 2, dadurch gekennzeichnet, daß die Komponente (I) erhältlich ist, indem in einem organischen Lösemittel oder in einem Gemisch organischer Lösemittel
(a1) 10 bis 90 Gew.-% aliphatische oder cycloaliphatische Ester der Acrylsäure oder Methacrylsäure oder ein Gemisch aus solchen Estern,
(a2) 0 bis 1 Gew.-% eines mindestens eine Hydroxylgruppe im Molekül tragenden ethylenisch ungesättigten Monomeren oder eines Gemisches aus solchen Monomeren,
(a3) 0 bis 30 Gew.-% eines mindestens eine Carboxylgruppe im Molekül tragenden ethylenisch ungesättigten Monomeren oder eines Gemisches aus solchen Monomeren und
(a4) 0 bis 7 Gew.-% eines von (a1), (a2) und (a3) verschiedenen ethylenisch ungesättigten Monomeren oder ein Gemisch aus solchen Monomeren
in Gegenwart von 10 bis 90 Gew.-% der Komponente (B) polymerisiert werden und das so erhaltene Reaktionsprodukt in eine wäßrige Dispersion überführt wird.

4. Verfahren nach einem der Ansprüche 1 bis 3, dadurch gekennzeichnet, daß die Komponente (B) erhältlich ist, indem die Umsetzung der Komponenten (b1) und (b2) unter Beteiligung von zumindest einer der Komponenten (b3) bis (b6)erfolgt, wobei
(b3)eine Verbindung, die neben einer polymerisierbaren Doppelbindung mindestens noch eine gegenüber NCO-Gruppen reaktive Gruppe enthält oder ein Gemisch aus solchen Verbindungen ist,
(b4)eine Verbindung, die mindestens eine gegenüber Isocyanatgruppen reaktive und mindestens eine zur Anionenbildung befähigte Gruppe im Molekül aufweist oder ein Gemisch aus solchen Verbindungen ist
(b5)eine Verbindung, die mindestens eine gegenüber NCO-Gruppen reaktive Gruppe und mindestens eine Poly(oxyalkylen)gruppe im Molekül aufweist, oder ein Gemisch aus solchen Verbindungen ist und
(b6)eine Hydroxyl- und/oder Aminogruppen enthaltende organische Verbindung mit einem Molekulargewicht von 60 bis 600, oder ein Gemisch aus solchen Verbindungen ist.

5. Verfahren nach einem der Ansprüche 1 bis 4, dadurch gekennzeichnet, daß die Komponente (I) ein zahlenmittleres Molekulargewicht von 2000 bis 20.000, eine Säurezahl von 5 bis 200 und eine Hydroxylzahl von 0 bis 60 aufweist.

6. Verfahren nach einem der Ansprüche 1 bis 5, dadurch gekennzeichnet, daß die Komponente (II) eine wäßrige Dispersion eines Styrol-Butadien-Copolymeren ist.

7. Wäßriger Lack, dadurch gekennzeichnet, daß er als Bindemittel eine Kombination aus den Komponenten (I) und (II) enthält, wobei die Komponenten (I) und (II) in einem Gewichtsverhältnis, bezogen auf Feststoff, von 1,0 : 0, 5 bis 1,0 : 5,0 vorliegen und die Komponente (I) eine wäßrige Dispersion eines Polymeren ist, die erhältlich ist, indem in einem organischen Lösemittel oder in einem Gemisch organischer Lösemittel
(A) ethylenisch ungesättigte Monomere oder ein Gemisch ethylenisch ungesättigter Monomere in Gegenwart
(B) eines Polyurethanharzes, das ein zahlenmittleres Molekulargewicht von 200 bis 30.000 aufweist, das im statistischen Mittel pro Molekül 0,05 bis 1,1 polymerisierbare Doppelbindungen enthält, und das erhältlich ist, indem (b1)ein gegebenenfalls polymerisierbare Doppelbindungen aufweisendes Polyesterpolyol mit einem zahlenmittleren Molekulargewicht von 400 bis 5000 oder ein Gemisch aus solchen Polyesterpolyolen und (b2)ein Polyisocyananat oder ein Gemisch aus Polyisocyanaten miteinander umgesetzt werden, wobei als Komponente (b1) ein Polyesterpolyol, das unter Verwendung einer polymerisierten Fettsäure mit 10 bis 44 C-Atomen im Molekül oder einer Mischung aus solchen polymerisierten Fettsäuren hergestellt worden ist, eingesetzt wird,
polymerisiert werden, wobei die Komponente (A) und/oder (B) zur Anionenbildung befähigte Gruppen enthält, und das so erhaltene Reaktionsprodukt in eine wäßrige Dispersion überführt wird und die Komponente (II) eine wäßrige Lösung oder Dispersion eines in Wasser löslichen oder dispergierbaren Styrol-Butadien Copolymeren oder eines in Wasser löslichen oder dispergierbaren Polyacrylat-, Polyester-, Polyurethan- oder Epoxidharzes oder eine Mischung aus solchen wäßrigen Lösungen oder Dispersionen ist.

8. Wäßriger Lack nach Anpruch 7, dadurch gekennzeichnet, daß die Komponente (I) erhältlich ist, indem in einem organischen Lösemittel oder in einem Gemisch organischer Lösemittel
(a1) 10 bis 90 Gew. -%, aliphatische oder cycloaliphatische Ester der Acrylsäure oder Methacrylsäure oder ein Gemisch aus solchen Estern,
(a2) 0 bis 1 Gew.-%, eines mindestens eine Hydroxylgruppe im Molekül tragenden ethylenisch ungesättigten Monomeren oder eines Gemisches aus solchen Monomeren,
(a3) 0 bis 30 Gew.-%, eines mindestens eine Carboxylgruppe im Molekül tragenden ethylenisch ungesättigten Monomeren oder eines Gemisches aus solchen Monomeren und
(a4) 0 bis 7 Gew.-%, eines von (a1), (a2) und (a3) verschiedenen ethylenisch ungesättigten Monomeren oder ein Gemisch aus solchen Monomeren
in Gegenwart von 10 bis 90 Gew.-% der Komponente (B) polymerisiert werden und das so erhaltene Reaktionsprodukt in eine wäßrige Dispersion überführt wird.

9. Wäßriger Lack nach Anspruch 7 oder 8, dadurch gekennzeichnet, daß die Komponente (B) erhältlich ist, indem die Umsetzung der Komponenten (b1) und (b2) unter Beteiligung von zumindest einer der Komponenten (b3) bis (b6)erfolgt, wobei
(b3)eine Verbindung, die neben einer polymerisierbaren Doppelbindung mindestens noch eine gegenüber NCO-Gruppen reaktive Gruppe enthält oder ein Gemisch aus solchen Verbindungen ist,
(b4)eine Verbindung, die mindestens eine gegenüber Isocyanatgruppen reaktive und mindestens eine zur Anionenbildung befähigte Gruppe im Molekül aufweist oder ein Gemisch aus solchen Verbindungen ist
(b5)eine Verbindung, die mindestens eine gegenüber NCO-Gruppen reaktive Gruppe und mindestens eine Poly(oxyalkylen)gruppe im Molekül aufweist, oder ein Gemisch aus solchen Verbindungen ist und
(b6)eine Hydroxyl- und/oder Aminogruppen enthaltende organische Verbindung mit einem Molekulargewicht von 60 bis 600, oder ein Gemisch aus solchen Verbindungen ist.

## Claims

1. Process for producing anticorrosion primer and/or surfacer coats, in which an aqueous coating material is applied to the substrate and the coating film obtained is dried, characterized in that the aqueous coating material comprises as its binder a combination of components (I) and (II), components (I) and (II) being present in a weight ratio, based on solids, of from 1.0:0.5 to 1.0:5.0 and component (I) being an aqueous polymer dispersion obtainable by subjecting
(A) ethylenically unsaturated monomers or a mixture of ethylenically unsaturated monomers in the presence
(B) of a polyurethane resin having a number-average molecular weight of from 200 to 30,000 and containing on average from 0.05 to 1.1 polymerizable double bonds per molecule and being obtainable by reacting (b1) a polyesterpolyol with or without polymerizable double bonds and having a number-average molecular weight of from 400 to 5000 or a mixture of such polyesterpolyols and (b2) a polyisocyanate or a mixture of polyisocyanates with one another, the polyesterpolyol used as component (b1) having been prepared using a polymerized fatty acid having 10 to 44 carbon atoms in the molecule or a mixture of such polymerized fatty acids,
to polymerization in an organic solvent or in a mixture of organic solvents, component (A) and/or (B) comprising groups capable of forming anions, and converting the resulting reaction product into an aqueous dispersion and component (II) being an aqueous solution or dispersion of a water-soluble or -dispersible styrene-butadiene copolymer or of a water-soluble or -dispersible polyacrylate, polyester, polyurethane or epoxy resin or a mixture of such aqueous solutions or dispersions.

2. Process according to Claim 1, characterized in that the coating film obtained is dried at a temperature which lies below 110°C.

3. Process according to Claim 1 or 2, characterized in that component (I) is obtainable by subjecting
(a1) from 10 to 90% by weight of aliphatic or cycloaliphatic esters of acrylic acid or methacrylic acid or a mixture of such esters,
(a2) from 0 to 1% by weight of an ethylenically unsaturated monomer carrying at least one hydroxyl group in the molecule, or of a mixture of such monomers,
(a3) from 0 to 30% by weight of an ethylenically unsaturated monomer carrying at least one carboxyl group in the molecule, or of a mixture of such monomers, and
(a4) from 0 to 7% by weight of an ethylenically unsaturated monomer which is different from (a1), (a2) and (a3), or a mixture of such monomers
to polymerization in an organic solvent or in a mixture of organic solvents and in the presence of from 10 to 90% by weight of component (B), and converting the resultant reaction product into an aqueous dispersion.

4. Process according to one of Claims 1 to 3, characterized in that component (B) is obtainable by conducting the reaction of components (b1) and (b2) with the participation of at least one of the components (b3) to (b6), where
(b3) is a compound which in addition to a polymerizable double bond also contains at least one NCO-reactive group or a mixture of such compounds,
(b4) is a compound which has at least one isocyanate-reactive group and at least one group which is capable of forming anions in the molecule or a mixture of such compounds
(b5) is a compound having at least one NCO-reactive group and at least one poly(oxyalkylene) group in the molecule, or a mixture of such compounds, and
(b6) is a hydroxyl- and/or amino-containing organic compound having a molecular weight of from 60 to 600, or a mixture of such compounds.

5. Process according to one of Claims 1 to 4, characterized in that component (I) has a number-average molecular weight of from 2000 to 20,000, an acid number of from 5 to 200 and a hydroxyl number of from 0 to 60.

6. Process according to one of Claims 1 to 5, characterized in that component (II) is an aqueous dispersion of a styrene-butadiene copolymer.

7. Aqueous coating material, characterized in that it comprises as its binder a combination of components (I) and (II), components (I) and (II) being present in a weight ratio, based on solids, of from 1.0:0.5 to 1.0:5.0 and component (I) being an aqueous polymer dispersion obtainable by subjecting
(A) ethylenically unsaturated monomers or a mixture of ethylenically unsaturated monomers in the presence
(B) of a polyurethane resin having a number-average molecular weight of from 200 to 30,000 and containing on average from 0.05 to 1.1 polymerizable double bonds per molecule and being obtainable by reacting (b1) a polyesterpolyol with or without polymerizable double bonds and having a number-average molecular weight of from 400 to 5000 or a mixture of such polyesterpolyols and (b2) a polyisocyanate or a mixture of polyisocyanates with one another, the polyesterpolyol used as component (b1) having been prepared using a polymerized fatty acid having 10 to 44 carbon atoms in the molecule or a mixture of such polymerized fatty acids,
to polymerization in an organic solvent or in a mixture of organic solvents, component (A) and/or (B) comprising groups capable of forming anions, and converting the resulting reaction product into an aqueous dispersion and component (II) being an aqueous solution or dispersion of a water-soluble or -dispersible styrene-butadiene copolymer or of a water-soluble or -dispersible polyacrylate, polyester, polyurethane or epoxy resin or a mixture of such aqueous solutions or dispersions.

8. Aqueous coating material according to Claim 7, characterized in that component (I) is obtainable by subjecting
(a1) from 10 to 90% by weight, of aliphatic or cycloaliphatic esters of acrylic acid or methacrylic acid or a mixture of such esters,
(a2) from 0 to 1% by weight, of an ethylenically unsaturated monomer carrying at least one hydroxyl group in the molecule, or of a mixture of such monomers,
(a3) from 0 to 30% by weight, of an ethylenically unsaturated monomer carrying at least one carboxyl group in the molecule, or of a mixture of such monomers, and
(a4) from 0 to 7% by weight, of an ethylenically unsaturated monomer which is different from (a1), (a2) and (a3), or a mixture of such monomers
to polymerization in an organic solvent or in a mixture of organic solvents and in the presence of from 10 to 90% by weight of component (B), and converting the resultant reaction product into an aqueous dispersion.

9. Aqueous coating material according to Claim 7 or 8, characterized in that component (B) is obtainable by conducting the reaction of components (b1) and (b2) with the participation of at least one of the components (b3) to (b6), where
(b3) is a compound which in addition to a polymerizable double bond also contains at least one NCO-reactive group or a mixture of such compounds,
(b4) is a compound which has at least one isocyanate-reactive group and at least one group which is capable of forming anions in the molecule or a mixture of such compounds
(b5) is a compound having at least one NCO-reactive group and at least one poly(oxyalkylene) group in the molecule, or a mixture of such compounds, and
(b6) is a hydroxyl- and/or amino-containing organic compound having a molecular weight of from 60 to 600, or a mixture of such compounds.

## Revendications

1. Procédé de production de couches d'apprêt et/ou de charge anticorrosion, dans lequel une peinture aqueuse est appliquée sur le substrat et la couche de peinture obtenue est séchée, caractérisé en ce que la peinture aqueuse contient, en tant que liant, une combinaison des composants (I) et (II), les composants (I) et (II) étant présents en un rapport pondéral, par rapport aux matières solides, de 1,0:0,5 à 1,0:5,0 et le composant (I) étant une dispersion aqueuse d'un polymère, pouvant être obtenue en polymérisant
(A) des monomères éthyléniquement insaturés ou un mélange de monomères éthyléniquement insaturés en présence de
(B) une résine de polyuréthanne qui présente un poids moléculaire moyen en nombre de 200 à 30 000, qui renferme, en moyenne statistique, 0,05 à 1,1 double liaison polymérisable par molécule, et qui peut être obtenue en faisant réagir (b1) un polyester-polyol renfermant éventuellement des doubles liaisons polymérisables et ayant un poids moléculaire moyen en nombre de 400 à 5 000 ou un mélange de tels polyester-polyols et (b2) un polyisocyanate ou un mélange de polyisocyanates, en utilisant, en tant que composant (b1), un polyester-polyol qui a été préparé en employant un acide gras polymérisé ayant de 10 à 44 atomes de carbone dans la molécule ou un mélange de tels acides gras polymérisés,
dans un solvant organique ou dans un mélange de solvants organiques, où les composants (A) et/ou (B) renferment des groupes capables de former des anions, et en transformant le produit de réaction ainsi obtenu en une dispersion aqueuse, et le composant (II) est une solution ou dispersion aqueuse d'un copolymère styrène-butadiène soluble ou dispersable dans l'eau ou d'une résine de polyacrylate, de polyester, de polyuréthanne ou époxy, soluble ou dispersable dans l'eau, ou un mélange de telles solutions ou dispersions aqueuses.

2. Procédé selon la revendication 1, caractérisé en ce que la couche de peinture obtenue est séchée à une température inférieure à 110°C.

3. Procédé selon la revendication 1 ou 2, caractérisé en ce que le composant (I) peut être obtenu en polymérisant
(a1) de 10 à 90% en poids d'esters aliphatiques ou cycloaliphatiques de l'acide acrylique ou de l'acide méthacrylique, ou d'un mélange de tels esters,
(a2) de 0 à 1% en poids d'un monomère éthyléniquement insaturé, portant au moins un groupe hydroxy dans la molécule, ou d'un mélange de tels monomères,
(a3) de 0 à 30% en poids d'un monomère éthyléniquement insaturé, portant au moins un groupe carboxy dans la molécule, ou d'un mélange de tels monomères et
(a4) de 0 à 7% en poids d'un monomère éthyléniquement insaturé, différent de (a1), (a2) et (a3), ou d'un mélange de tels monomères,
dans un solvant organique ou dans un mélange de solvants organiques, en présence de 10 à 90% en poids du composant (B), et en transformant le produit de réaction ainsi obtenu en une dispersion aqueuse.

4. Procédé selon l'une quelconque des revendications 1 à 3, caractérisé en ce que le composant (B) peut être obtenu en réalisant la réaction des composants (b1) et (b2) avec la participation d'au moins l'un des composants (b3) à (b6), où
(b3) est un composé qui renferme également, en plus d'une double liaison polymérisable, au moins encore un groupe réactif vis-à-vis des groupes NCO, ou un mélange de tels composés,
(b4) est un composé qui renferme, dans la molécule, au moins un groupe réactif vis-à-vis des groupes isocyanate et au moins un groupe capable de former des anions, ou un mélange de tels composés,
(b5) est un composé qui renferme, dans la molécule, au moins un groupe réactif vis-à-vis des groupes NCO et au moins un groupe polyoxyalkylène, ou un mélange de tels composés et
(b6) est un composé organique renfermant des groupes hydroxy et/ou amino, ayant un poids moléculaire de 60 à 600, ou un mélange de tels composés.

5. Procédé selon l'une quelconque des revendications 1 à 4, caractérisé en ce que le composant (I) présente un poids moléculaire moyen en nombre de 2 000 à 20 000, un indice d'acide de 5 à 200 et un indice d'hydroxy de 0 à 60.

6. Procédé selon l'une quelconque des revendications 1 à 5, caractérisé en ce que le composant (II) est une dispersion aqueuse d'un copolymère styrène-butadiène.

7. Peinture aqueuse, caractérisée en ce qu'elle contient, en tant que liant, une combinaison des composants (I) et (II), les composants (I) et (II) étant présents en un rapport pondéral, par rapport aux matières solides, de 1,0:0,5 à 1,0:5,0, et le composant (I) étant une dispersion aqueuse d'un polymère, pouvant être obtenue en polymérisant
(A) des monomères éthyléniquement insaturés ou un mélange de monomères éthyléniquement insaturés en présence de
(B) une résine de polyuréthanne qui présente un poids moléculaire moyen en nombre de 200 à 30 000, qui renferme, en moyenne statistique, 0,05 à 1,1 double liaison polymérisable par molécule, et qui peut être obtenue en faisant réagir (b1) un polyester-polyol renfermant éventuellement des doubles liaisons polymérisables et ayant un poids moléculaire moyen en nombre de 400 à 5 000 ou un mélange de tels polyester-polyols et (b2) un polyisocyanate ou un mélange de polyisocyanates, en utilisant, en tant que composant (b1), un polyester-polyol qui a été préparé en employant un acide gras polymérisé ayant de 10 à 44 atomes de carbone dans la molécule ou un mélange de tels acides gras polymérisés,
dans un solvant organique ou dans un mélange de solvants organiques, où les composants (A) et/ou (B) renferment des groupes capables de former des anions, et en transformant le produit de réaction ainsi obtenu en une dispersion aqueuse, et le composant (II) est une solution ou dispersion aqueuse d'un copolymère styrène-butadiène soluble ou dispersable dans l'eau ou d'une résine de polyacrylate, de polyester, de polyuréthanne ou époxy, soluble ou dispersable dans l'eau, ou un mélange de telles solutions ou dispersions aqueuses.

8. Peinture aqueuse selon la revendication 7, caractérisée en ce que le composant (I) peut être obtenue en polymérisant
(a1) de 10 à 90% en poids d'esters aliphatiques ou cycloaliphatiques de l'acide acrylique ou de l'acide méthacrylique, ou d'un mélange de tels esters,
(a2) de 0 à 1% en poids d'un monomère éthyléniquement insaturé, portant au moins un groupe hydroxy dans la molécule, ou d'un mélange de tels monomères,
(a3) de 0 à 30% en poids d'un monomère éthyléniquement insaturé, portant au moins un groupe carboxy dans la molécule, ou d'un mélange de tels monomères et
(a4) de 0 à 7% en poids d'un monomère éthyléniquement insaturé, différent de (a1), (a2) et (a3), ou d'un mélange de tels monomères,
dans un solvant organique ou dans un mélange de solvants organiques, en présence de 10 à 90% en poids du composant (B), et en transformant le produit de réaction ainsi obtenu en une dispersion aqueuse.

9. Peinture aqueuse selon la revendication 7 ou 8, caractérisée en ce que le composant (B) peut être obtenu en réalisant la réaction des composants (b1) et (b2) avec la participation d'au moins l'un des composants (b3) à (b6), où
(b3) est un composé qui renferme également, en plus d'une double liaison polymérisable, au moins encore un groupe réactif vis-à-vis des groupes NCO, ou un mélange de tels composés,
(b4) est un composé qui renferme, dans la molécule, au moins un groupe réactif vis-à-vis des groupes isocyanate et au moins un groupe capable de former des anions, ou un mélange de tels composés,
(b5) est un composé qui renferme, dans la molécule, au moins un groupe réactif vis-à-vis des groupes NCO et au moins un groupe polyoxyalkylène, ou un mélange de tels composés et
(b6) est un composé organique renfermant des groupes hydroxy et/ou amino, ayant un poids moléculaire de 60 à 600, ou un mélange de tels composés.
